# EUROPEAN PATENT APPLICATION

(11) **EP 2 431 546 A1**
(43) Date of publication of application: **21.03.2012**
(21) Application number: 10176897.6
(22) Date of filing: 15.09.2010
(51) Int. Cl.: E04B 7/14, F24J 2/52, H01L 31/042, E04H 6/02

(54) **Device for fixing panels to suspended cables, and panel fixable with such device**

(71) Applicant: ISCOM S.r.l., 37026 Pescantina (Verona) (IT)
(72) Inventor: Menegoli, Mauro, 37026 Pescantina (Verona) (IT)
(74) Representative: Feltrinelli, Secondo Andrea

(57) **Abstract**

Device for fixing panels (2) to suspended cables (3), comprising at least one element (6,7) equipped with a channel (8) for inserting a suspended cable (3) and with at least one seat (9) for retaining one of the edges (10) of at least one panel (2).

## Description

### TECHNICAL FIELD OF THE INVENTION

The present invention concerns a device for fixing panels to suspended cables, and also a panel able to be fixed with said device.

More specifically, the present invention concerns a device for fixing panels, equipped with photovoltaic cells, to support structures for suspended cables, arranged in open areas.

### STATE OF THE ART

So-called alternative and renewable energy source, like for example photovoltaic cells are becoming increasingly common and important.

As known, they are usually mounted in open areas at surfaces exposed to the sun for many hours of the day, like for example roofs of buildings, eaves, terraces, and the like.

In other cases, where available, the aforementioned cells are installed in fields, car parks, gardens, or other large free spaces without shaded areas.

In order to install the aforementioned cells safely and reliably, support frames are usually provided, made for example from steel or other materials with suitable characteristics, fixed onto the surface of interest.

For example, in the case of installation on a roof, it is thus necessary to foresee connection means, possibly solid, of the support frame to the bearing structure of the roof; on the other hand, in the case of installation in an open area like for example a field or a lawn, it is necessary to select and arrange areas of ground in which to drive support uprights of the frame.

As can be seen, therefore, the cost of making the support frames, and the time taken to arrange them and install them, often constitute substantial impediments, which are mainly economic: such impediments can also lead to the user abandoning the idea of using said alternative energy source, since the investment costs are considered too high in relation to the economic benefit that can potentially be obtained by using the energy produced by the cells.

Moreover, once installed, the aforementioned support frames of the cells still require a certain amount of periodic maintenance, safety checks, and various other control and monitoring activities that have a noticeable influence on the operating cost of the photovoltaic plant.

### PURPOSES OF THE INVENTION

The technical task of the present invention is therefore to avoid the aforementioned drawbacks, providing a fixing device that allows the panels carrying the photovoltaic cells to be mounted quickly and easily on suspended cables, for example of conventional and pre-existing structures.

In such a technical task, a purpose of the present invention is to make a device for fixing panels to suspended cables, and relative panels, with a simple and cost-effective structure.

Yet another purpose of the present invention is to make a device for fixing panels to suspended cables with extremely versatile use on any type of suspended cable. This task and these purposes are accomplished by the device for fixing panels to suspended cables according to the attached claim 1.

The fixing device according to the invention comprises at least one element equipped with a channel for inserting a suspended cable and with at least one seat for retaining one of the edges of at least one panel. More specifically, the device comprises a first element and a second element snap-coupled together that define a cable passage channel between them, and that allow two contiguous panels to be retained stably and securely in respective seats.

Further advantageous characteristics are described in the dependent claims.

### BRIEF DESCRIPTION OF THE DRAWINGS

The characteristics of the invention will become clearer to any man skilled in the art from the following description and from the attached tables of drawings, given as a non-limiting example, in which:
- figure 1 is an axonometric view of a support structure for suspended cables, to which panels are connected through fixing devices according to the invention;
- figure 2 is a front view of the support structure of figure 1;
- figure 3 is a plan view of the support structure of figures 1,2;
- figure 4 is a detailed side view of the support structure of figures 1,2,3;
- figure 5 is a section of the support structure carried out according to the plane V-V of figure 3;
- figure 6 is a detailed perspective view of a fixing device according to the invention, associated with a suspended cable and with two contiguous panels;
- figure 7 is a perspective view of the fixing device;
- figure 8 is a front view of the device;
- figure 9 is a plan view of the device;
- figure 10 is a side view of the second element of the device;
- figure 11 is a front view of the second element of the device;
- figure 12 is a plan view of the second element of the device;
- figure 13 is a perspective view of the first element of the device;
- figure 14 is a front view of the first element of the device;
- figure 15 is a perspective view of another embodiment of the fixing device;
- figure 16 is a front view of the fixing device of figure 15;
- figure 17 is a plan view of the fixing device of figures 15,16;
- figure 18 is a side view of the second element of the device of figures 15-17;
- figure 19 is a front view of the second element of the device of figures 15-18;
- figure 20 is a plan view of the second element of the device of figures 15-19;
- figure 21 is a perspective view of the first element of the device of figures 15-20;
- figure 22 is a front view of the first element of the device of figures 15-21;
- figure 23 is a front view of another embodiment of the fixing device;
- figure 24 is a perspective view of the fixing device of figure 23;
- figure 25 is a plan view of the fixing device of figures 23,24;
- figure 26 is a side view of the second element of the device of figures 23-25;
- figure 27 is a front view of the second element of the device of figures 23-26;
- figure 28 is a plan view of the second element of the device of figures 23-27;
- figure 29 is a perspective view of the first element of the device of figures 23-28;
- figure 30 is a front view of the first element of the device of figures 23-29;
- figure 31 is an axonometric view of a support structure for suspended cables, to which panels are connected through fixing devices according to another embodiment of the invention;
- figure 32 is a detail of figure 31;
- figure 33 is a cross section of the support structure of figures 31,32;
- figure 34 is a perspective view of the fixing device of figures 31-33;
- figure 35 is a front view of the fixing device of figures 31-34;
- figure 36 is a perspective view of the second element of the device of figures 31-35;
- figure 37 is a side view of the second element of the device of figures 31-36;
- figure 38 is a front view of the second element of the device of figures 31-37;
- figure 39 is a plan view of the second element of the device of figures 31-38;
- figure 40 is a perspective view of the first element of the device of figures 31-39;
- figure 41 is a front view of the first element of the device of figures 31-40;
- figure 42 is a view from below of the first element of the device of figures 31-41;
- figure 43 is a perspective view of yet another embodiment of the fixing device;
- figure 44 is a front view of the fixing device of figure 43;
- figure 45 is a plan view of the fixing device of figures 43,44;
- figure 46 is a side view of the second element of the device of figures 43-45;
- figure 47 is a front view of the second element of the device of figures 43-46;
- figure 48 is a plan view of the second element of the device of figures 43-47;
- figure 49 is a perspective view of the first element of the device of figures 43-48;
- figure 50 is a front view of the first element of the device of figures 43-49.

### EMBODIMENTS OF THE INVENTION

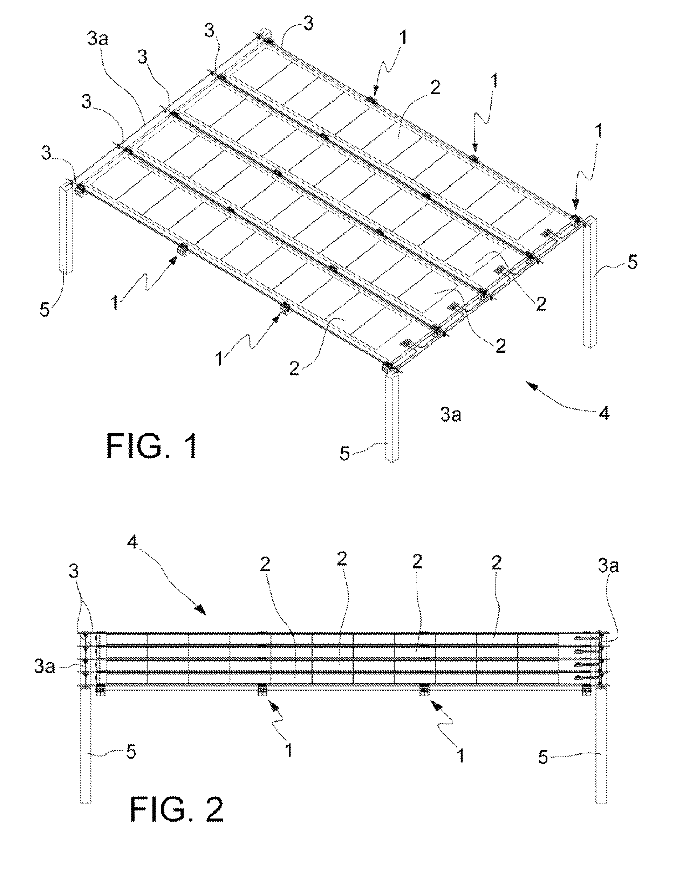

With reference to the attached figure 1, a device for fixing panels 2 to suspended cables 3 according to the present invention is wholly indicated with 1.

In greater detail, figures 1,2,3 illustrate a support structure, wholly indicated with 4, for the suspended cables 3.

The structure 4 illustrated as an example in figures 1,2,3 comprises four vertical uprights 5, fixed into the ground substantially at the four vertices of a rectangle. The four uprights 5 are connected together in pairs, at the short sides - or else also at the long sides - by side cables 3a.

The side cables 3a act as supports for the suspended cables 3, which are indeed fixed to the side cables 3a parallel to one another and arranged a certain distance apart, suitably selected according to considerations that will become clearer hereafter.

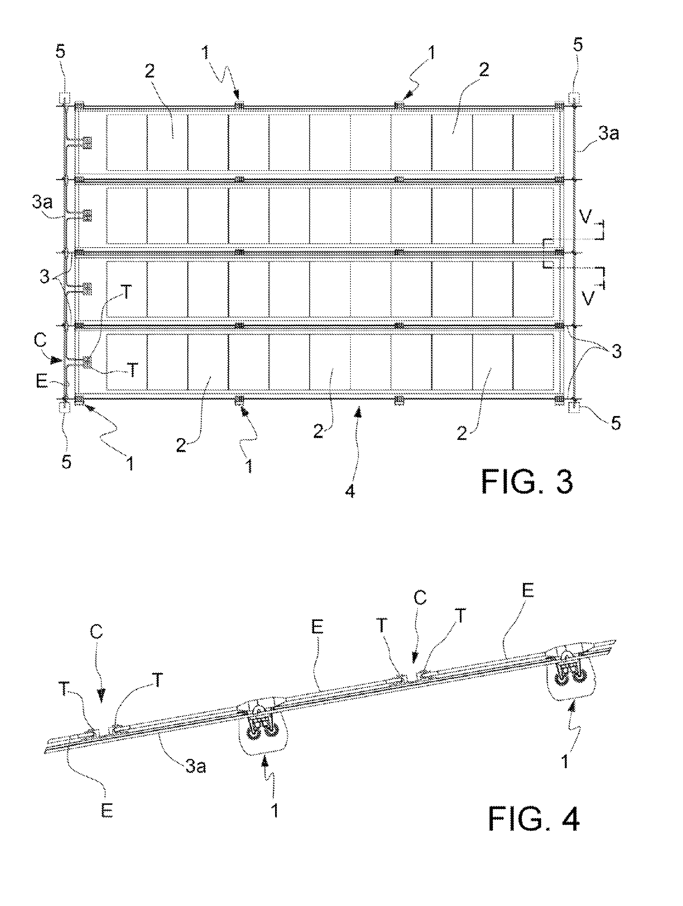

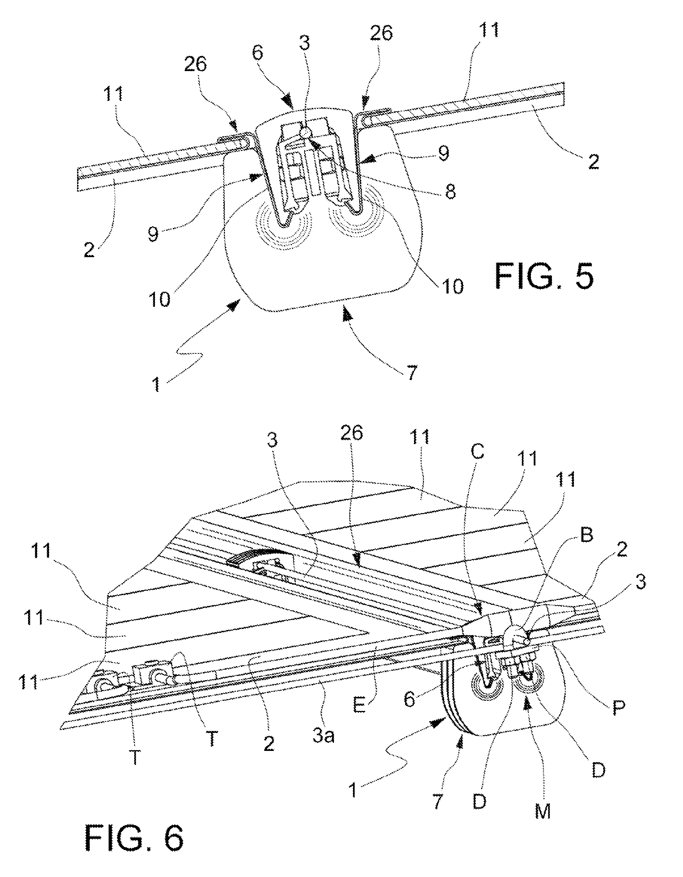

As can be seen in particular in figures 4 and 6, the side cables 3a are fixed to the suspended cables 3, for example, through clamping means, wholly indicated with M.

In particular, the aforementioned clamping means M comprise a bar B, bent substantially in a U, mounted straddling the crossing point of each side cable 3a with each suspended cable 3. The ends of the bar B, which are threaded, are inserted into two respective holes foreseen in a plate P, which on the other side locks the side cable 3a and the suspended cable 3. The ends of the bar B are then locked by two nuts D.

Near to the clamping means M there are series electrical connection means C of the various panels 2 mounted on the support structure 4.

In particular, said connection means C, of a *per sé* known type and which in any case do not constitute the object of the present invention, comprise, for each panel 2, two terminals T that, through electrical cables E, are placed in connection with the terminals T of the immediately adjacent panels 2. The series of connections between the panels 2 ends, in a known manner, with the connection to means for accumulating electrical energy, not represented in the figures because they are of the known type and because they do not constitute the object of the invention.

The suspended cables 3 and the side cables 3a can for example be made from steel, or from any other material with comparable characteristics.

The support structure 4 represented in figures 1,2,3 can, for example, be a conventional and pre-existing structure, or else just a portion thereof, already installed in a field, on a lawn, or in any other open space. Just as a non-limiting example, it can consist of the support structure for the tarpaulin for covering cultivations, such as vineyards and the like. Alternatively, the support structure 4 can be specially arranged for mounting panels 2, still clearly at a very low cost and without the need to use skilled workers. The fixing device 1 comprises at least one element 6,7 equipped with a channel 8 for inserting a suspended cable 3, and with at least one seat 9 for retaining one of the edges 10 of at least one panel 2.

More specifically, as illustrated in figure 5, the device 1 comprises a pair of seats 9 for retaining two respective edges 10 of two contiguous panels 2, so as to create a continuous structure of panels 2.

As can be seen in detail for example in figure 6, each panel 2 is equipped with a distribution of photovoltaic cells 11, of the *per sé* known type, fixed to the panel 2 in a way known in the field.

Each panel 2 can, for example, be made from a metallic material like aluminium, or else from any other material with suitable characteristics, thus substantially light but strong.

In greater detail, the device 1 comprises a first element 6 and a second element 7, associated with one another.

The first element 6 and the second element 7 respectively comprise a first surface 12 and a second surface 13, substantially facing one another, which define the channel 8 for the passage of the suspended cable 3.

At least one from the aforementioned first surface 12 and second surface 13 comprises means, wholly indicated with 14, for retaining the suspended cable 3, which allow the fixing device 1 to be held hooked to the suspended cable 3 in the correct fixing position, without accidental movements.

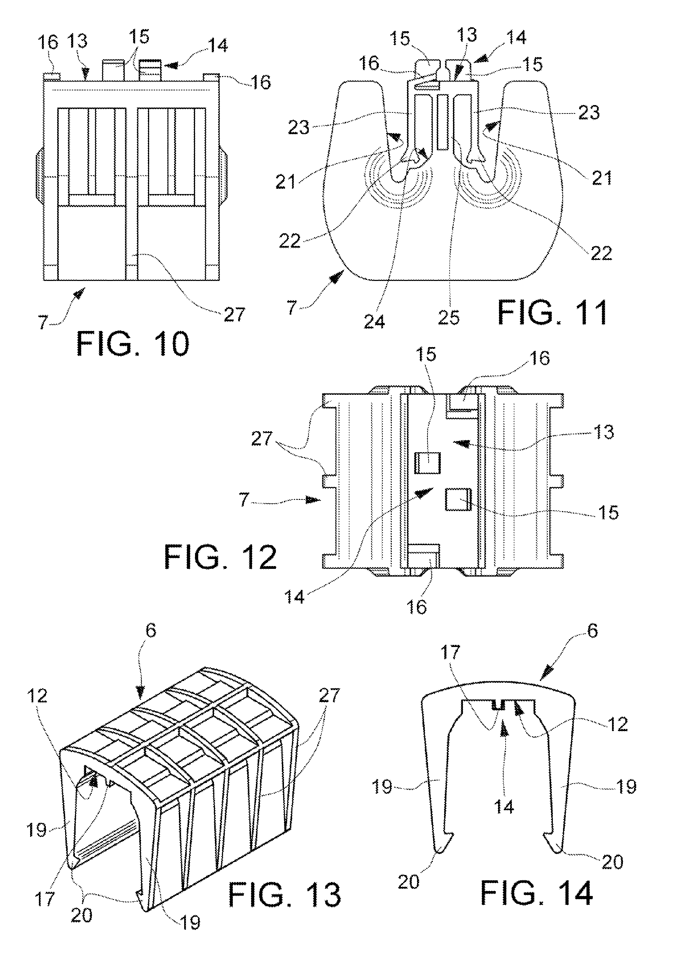

As can be seen in figures 10-12, the aforementioned means 14 for retaining the suspended cable 3 comprise at least one substantially hook-shaped appendage 15, foreseen at the second surface 13. More specifically, the retaining means 14, at the second surface 13, comprise a pair of hook-shaped appendages 15 offset with respect to one another, so as to constitute a constraint to support and stop the rotation of the device 1 with respect to the suspended cable 3.

The retaining means 14, at the second surface 13, also comprise two raised end tongues 16 that constitute two abutments for the suspended cable 3, and that indeed promote keeping the fixing device 1 in position with respect to the suspended cable 3.

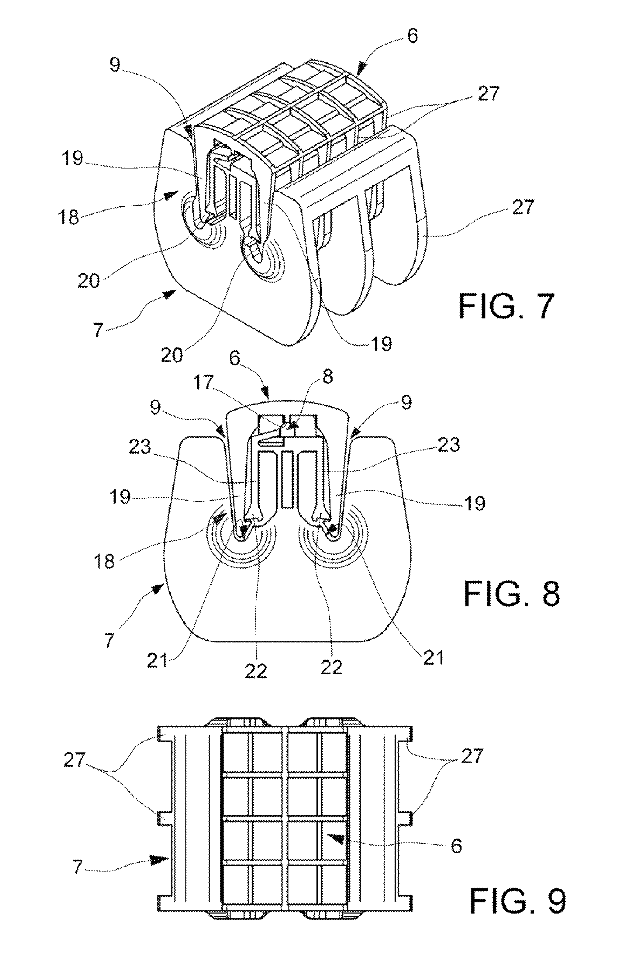

As can be seen for example in figures 13,14, said retaining means 14 of the suspended cable 3 also comprise a central rib 17 foreseen at the first surface 12 of the first element 6. In particular, in figure 8 it can be seen that the central rib 17 abuts on the suspended cable 3, keeping the fixing device 1 in position and preventing any movement thereof.

The first element 6 and the second element 7 are provided with mutual snap-coupling means, wholly indicated with 18.

Such snap coupling means 18 comprise a pair of tabs 19, foreseen in the first element 6, equipped with respective end teeth 20.

The snap coupling means 18 also comprise a pair of housings 21, foreseen in the second element 7, equipped with respective abutment profiles 22 for the teeth 20 of the first element 6.

The profiles 22 of the housings 21 are, in greater detail, foreseen in respective elastically yielding flaps 23.

The second element 7, as can be seen in figure 11, comprises a central chamber 24, from which a support portion 25 for the second surface 13 and for the elastically yielding flaps 23 projects.

Now with reference to figures 7,8, the seats 9 for retaining two contiguous respective panels 2 are defined between the housings 21 of the second element 7 and the tabs 19 of the first element 6. In other words, the seats 9 consist of thin gaps located between the housings 21 and the respective tabs 19.

The seats 9 have a substantially V-shaped cross section, so as to facilitate the coupling between the various components.

Indeed, each panel 2, as can be seen in figures 5 and 6, comprises at least one edge 10 double-folded so as to shape an end strip, wholly indicated with 26, having a substantially V-shaped cross section, matching that of each seat 9 of the fixing device. Each end strip 26 can be defined by a portion of the panel 2 itself.

The first element 6 and the second element 7 can, for example, be made by moulding material like plastic, or another type of material with suitable characteristics, and they are equipped with respective reinforcement ribs 27.

The way of using the device 1 according to the present invention, in light of what has been described, is totally intuitive.

The second elements 7 are hooked onto the suspended cables 3 fixedly connecting them in the retaining means 14.

In order to mount the panels 2 on suspended cables 3, the edges 10 of two contiguous panels 2 are positioned inside the housings 21 of the second element 7 of the device 1, so as to perfectly adhere to the surface of the housings 21 themselves.

In relation to the length of the panels 2, there can be many devices 1, so as to obtain stable and secure fixing. In the support structure 4 of figures 1,2,3, for example, for each suspended cable 3 four fixing devices 1 are used.

At this point, the first elements 6 are snap-coupled with the respective second elements 7, so as to take the teeth 20 under the respective profiles 22. This operation is made simple and easy by the elastic flexibility of the flaps 23 and by the inclined plane of the teeth 20 and of the profiles 22, which allow the insertion of the tabs 19 with light pressure and then snap them in.

Having done this, the edges 10 of two contiguous panels 2 are stably locked into the respective seats 9, whereas the suspended cable 3 is locked by the retaining means 14.

The invention, thus conceived, allows important technical advantages to be obtained.

Indeed, firstly it allows panels, for example of the type carrying photovoltaic cells, to be fixed to suspended cables of conventional and pre-existing structures - or else specially provided structures - in an easy, simple and cost-effective manner.

Pre-existing structures can, therefore, be used for a new purpose, without the need for any investment in the preparation of support frames.

The installation of the panels can also be carried out by not necessarily skilled workers, since it simply consists of snap-assembling two components, i.e. the first element 6 and the second element 7.

The fixing devices are very simple and cost-effective to make, and since they consist of just two components snap-coupled together they substantially require no type of maintenance.

Since the fixing that the devices 1 are able to make is particularly stable and secure, they can be used even in a limited number to fix even very long panels 2. Moreover, the stable fixing of the first element 6 to the second element 7 is unaffected by wind or other bad weather.

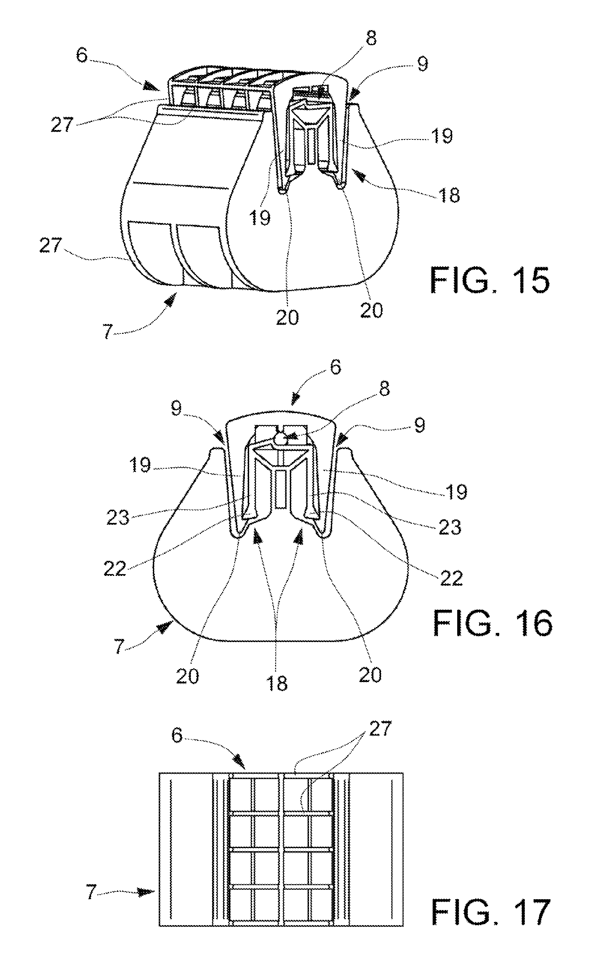

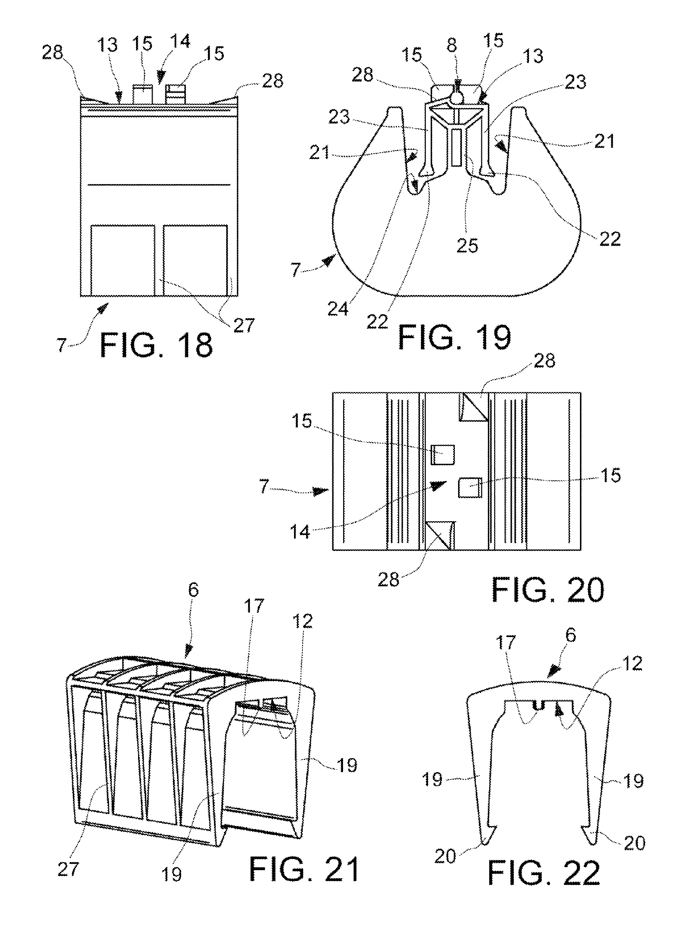

Another embodiment of the fixing device 1 according to the invention is illustrated in figures 15-22.

In such figures the same reference numerals have been used as the previous embodiment to indicate the corresponding parts.

The present embodiment differs from the previous one due to the presence, in the retaining means 14 of the suspended cable 3 foreseen in the second surface 13, of joined areas 28 that constitute softer abutments for the cable 3 itself, instead of the raised end tongues of the previous embodiment. This solution is preferred in the case in which there is a need for greater strength of the retaining means 14, for example in the case of installation in windy locations, or places subject to very bad weather.

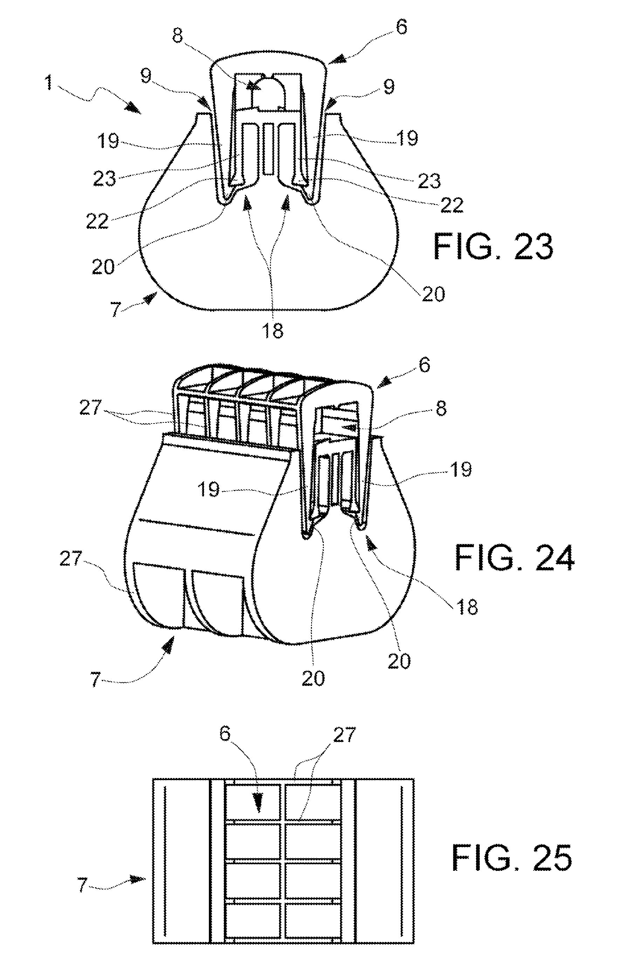

Another embodiment of the fixing device 1 according to the present invention is represented in figures 23-30. In such figures the same reference numerals have been used as in the previous embodiments to indicate the corresponding parts.

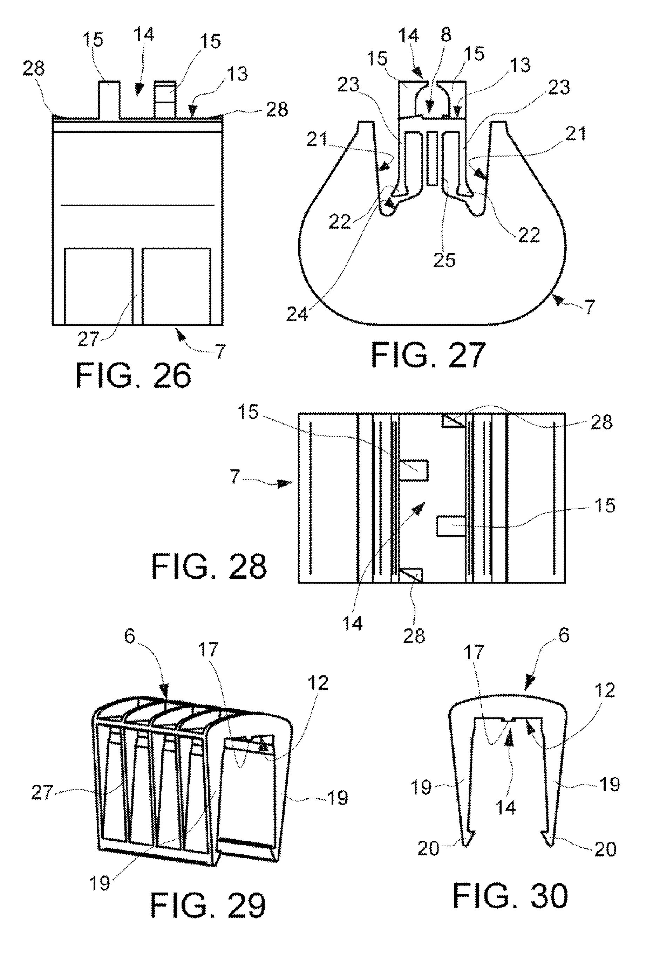

This embodiment differs from the previous one due to the dimensions of the channel 8 for passing the suspended cable 3, which are greater, as can be seen in particular in figures 23 and 27. Consequently, the hook-shaped appendages 15 are of greater dimensions, whereas the joined areas 28 and the central rib 17 are of smaller dimensions.

The present embodiment, therefore, is particularly recommended for installations in which the suspended cable 3 has a large section; the overall bulk of the device, however, stays the same.

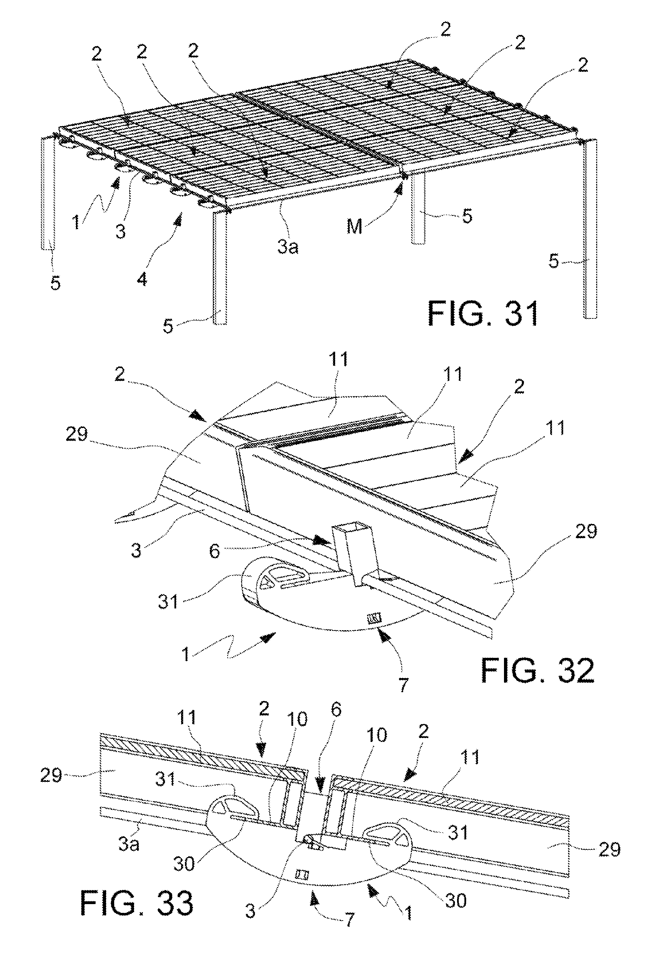

Another embodiment of the fixing device 1 according to the present invention is represented in figures 31-42. In such figures the same reference numerals as the previous embodiment have been used to indicate the corresponding parts.

In particular, figure 31 shows a support structure 4 with the panels 2 mounted with fixing devices 1 according to the present embodiment of the invention.

As can be seen in figures 32 and 33, each panel 2 comprises a rigid support framework 29, on which the photovoltaic cells 11, of the *per sé* known type, are mounted.

Each support framework 29 is made for example from metallic material. Each support framework 29 comprises, at the bottom, a respective edge 10 that ends with a respective end appendage 30 that projects inwards. Correspondingly, in this embodiment, the second element 7, made wider and flatter, comprises two opposite end portions 31 folded towards the centre, which define the seats 9 for the edges 10 of the panels 2, as illustrated in figure 33, and more specifically for the end appendages 30 of said edges 10.

The first element 6 has a substantially parallelepiped internally hollow shape.

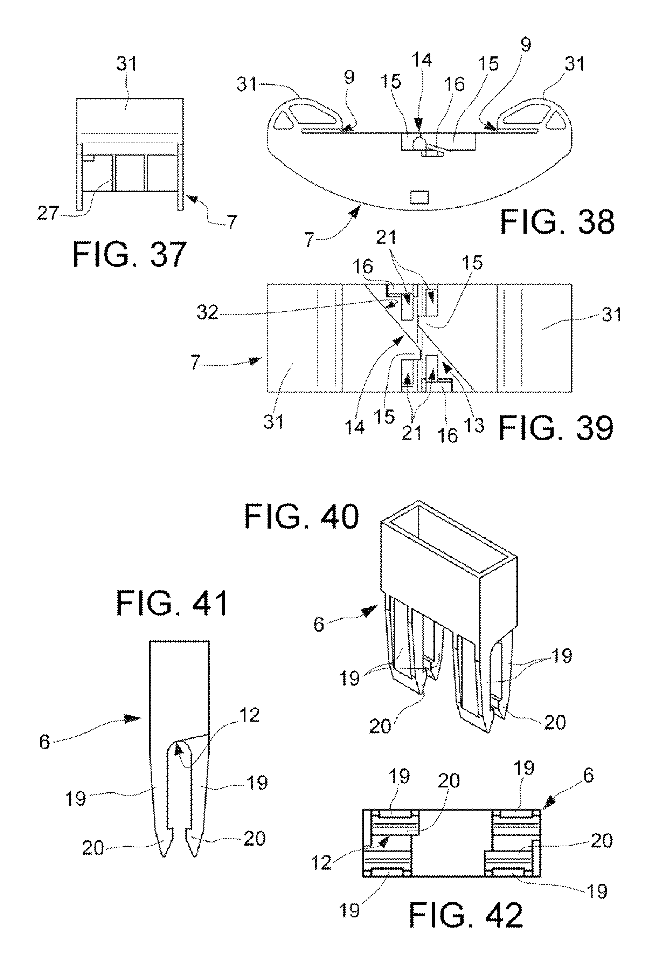

The snap coupling means 18 between the first element 6 and the second element 7 comprise four tabs 19 that extend from the lower portion of the first element 6. The tabs 19 are in slightly offset pairs, as can be seen in the representation from below of figure 42. Between the tabs 19 there is the first surface 12 that defines the channel 8 for passing the suspended cable 3.

The snap coupling means 18 also comprise four housings 21, foreseen in the second surface 13 of the second element 7, in slightly offset pairs, in which the four tabs 19 of the first element 6 are intended to snap-engage.

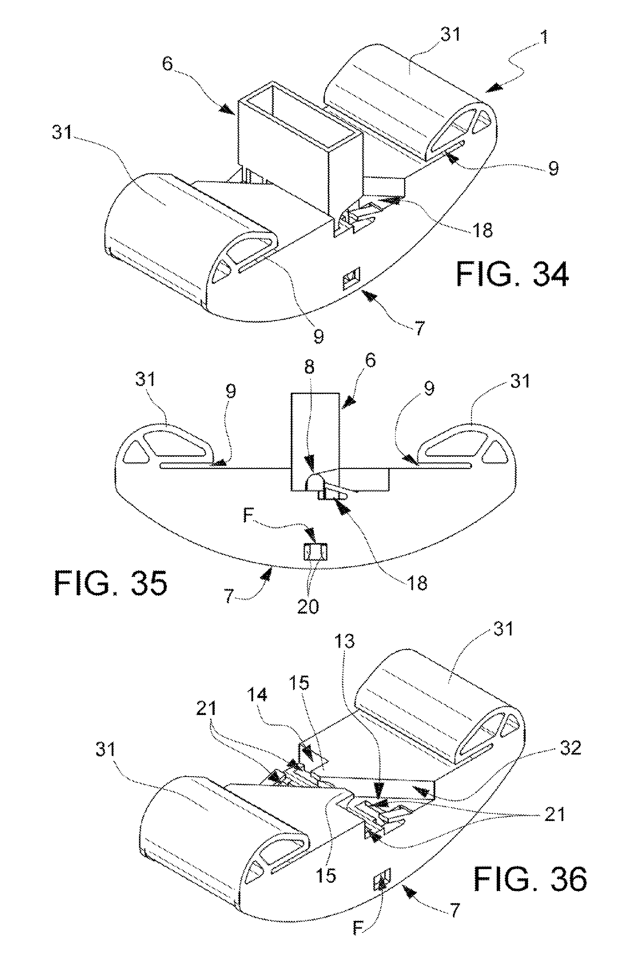

The tabs 19, indeed, are provided with respective teeth 20 that elastically abut inside the housings 21. As shown in figure 35, front windows F of the second element 7 allow intervention on the teeth 20 to separate the tabs 19 and extract them from the seats 21, in the case in which the device 1 has to be dismounted.

The means 14 for retaining the suspended cable 3 comprise a pair of hook-shaped appendages 15 that, with respective opposite surfaces, define an inclined slot 32 for easier insertion of the suspended cable 3 in the assembly step.

The means 14 for retaining the suspended cable 3 also comprise two raised end tongues 16.

In the assembly of the device 1, the suspended cable is passed through the inclined slot 32 of the second element 7, and then inserted below the retaining means 14; then, after having inserted the edges 10 of the panels 2 into the seats 9, the first element 6 is snapped into the second element 7, thus locking the panels 2 and the fixing system 1 to the suspended cable 3, for insertion of the tabs 19 in the respective seats 21.

The present embodiment makes it possible to mount panels supported on rigid frameworks of a certain height onto suspended cables. The frameworks can of course also be of different shapes and sizes with respect to those represented in the figures.

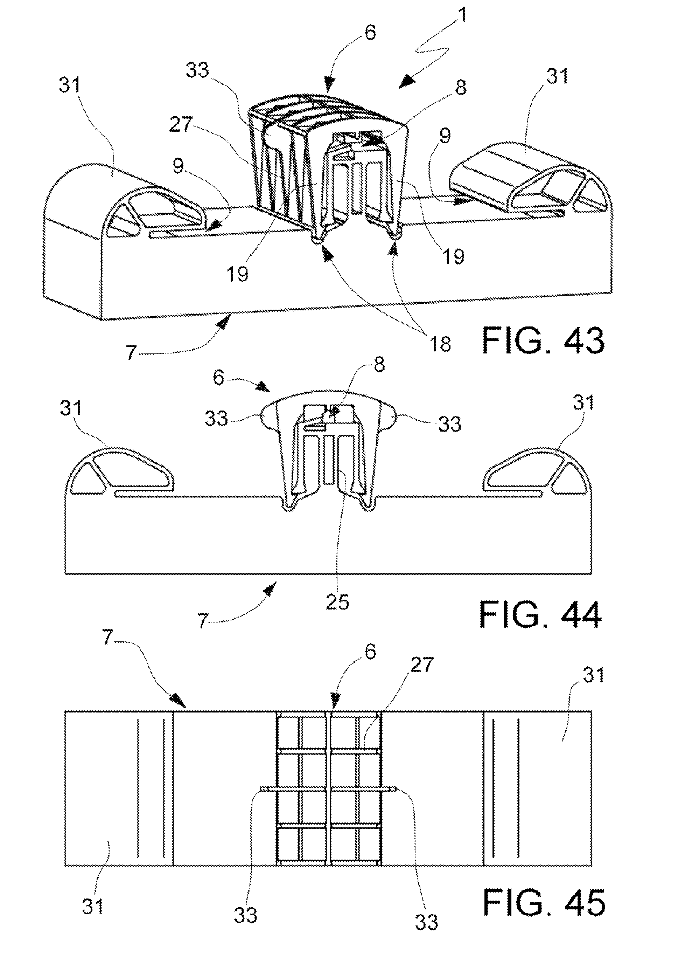

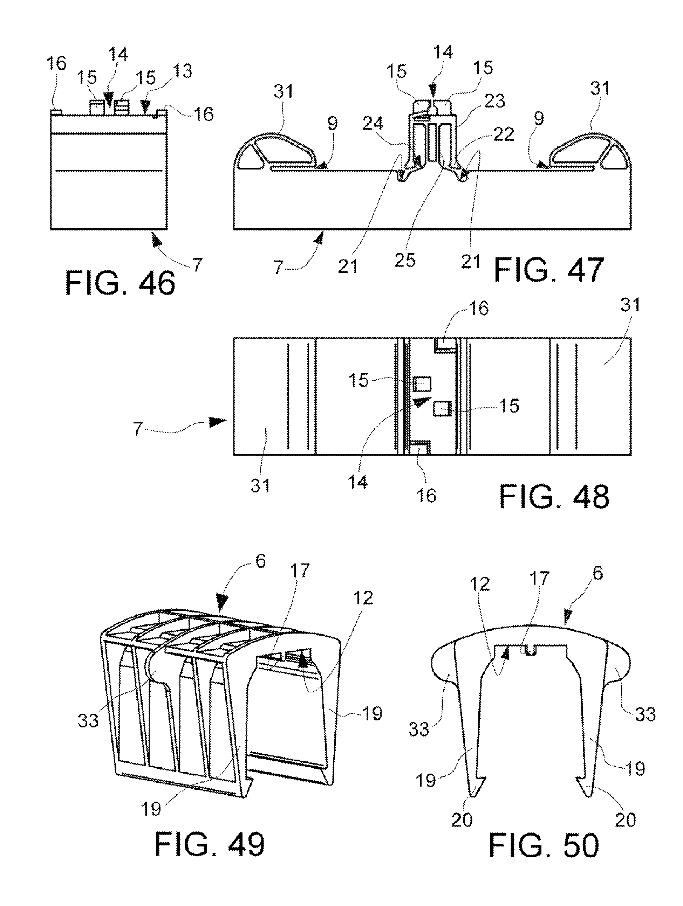

Another embodiment of the fixing device 1 according to the present invention is illustrated in figures 43-50. In such figures the same reference numerals have been used as the previous embodiment to indicate the corresponding parts.

In this embodiment, the second element 7 comprises two end opposite portions 31 folded towards the centre, suitable for retaining respective edges of two respective panels 2 of low width, not represented in the figures.

Moreover, the second element 7 has much greater dimensions than the previous embodiments, and it is substantially parallelepiped shaped.

The first element 6, on the other hand, is equipped with two side ears 33 fixedly connected to two respective ribs 27, which allow better manipulation of the element 6 itself in the mounting and dismounting operations.

It has thus been seen how the invention achieves the proposed purposes.

The present invention has been described according to preferred embodiments, but equivalent variants can be devised without departing from the scope of protection offered by the following claims.

## Claims

1. Device for fixing panels (2) to suspended cables (3), **characterised in that** it comprises at least one element (6,7) equipped with a channel (8) for inserting a suspended cable (3) and with at least one seat (9) for retaining one of the edges (10) of at least one panel (2).

2. Device according to claim 1, comprising a pair of seats (9) for retaining two respective edges (10) of two contiguous panels (2).

3. Device according to claim 1 or 2, comprising a first element (6) and a second element (7) associated with one another.

4. Device according to one of the previous claims, wherein said first element (6) and second element (7) respectively comprise a first surface (12) and a second surface (13) substantially facing one another that define said channel (8).

5. Device according to one of the previous claims, wherein at least one from said first surface (12) and second surface (13) comprises means (14) for retaining the suspended cable (3).

6. Device according to the previous claim, wherein said means (14) for retaining the suspended cable (3) comprise at least one substantially hook-shaped appendage (15) foreseen in said second surface (13).

7. Device according to claim 5 or 6, wherein said means (14) for retaining the suspended cable (3) comprise a central rib (17) foreseen in said first surface (12).

8. Device according to one of claims 5,6,7, wherein said retention means (14) comprise at least one raised end abutment tongue (16) for the suspended cable (3).

9. Device according to one of the previous claims, wherein said first element (6) and second element (7) are provided with snap coupling means (18).

10. Device according to the previous claim, wherein said snap coupling means (18) comprise at least one pair of tabs (19) of said first element (6) equipped with respective end teeth (20), and at least one pair of housings (21), foreseen in said second element (7).

11. Device according to the previous claim, wherein said housings (21) are equipped with respective abutment profiles (22) for said teeth (20).

12. Device according to the previous claim, wherein said profiles (22) of said housings (21) are foreseen in respective elastically yielding flaps (23).

13. Device according to claim 10, 11 or 12, when dependent on claim 2, wherein said retention seats (9) of two respective contiguous panels (2) are defined between said housings (21) of said second element (7) and said tabs (19) of said first element (6).

14. Device according to the previous claim, wherein said seats (9) have a substantially V-shaped cross section.

15. Device according to one of the previous claims, wherein said second element (7) comprises a central chamber (24) from which a support portion (25) for said second surface (13) and for said elastically yielding flaps (23) projects.

16. Device according to one of the previous claims, wherein said second element (7) comprises two end portions (31) folded towards the centre suitable for retaining respective edges (10) of two respective panels (2).

17. Device according to claim 6, comprising two of said substantially hook-shaped appendages (15) defining at least one inclined slot (32) for inserting the suspended cable (3).

18. Panel (2), able to be fixed to a device according to one of claims 1 to 17, **characterised in that** it comprises at least one edge (10) double-folded so as to shape an end strip (26) having a substantially V-shaped cross section.

19. Panel (2) according to claim 18, comprising at least one photovoltaic cell (11).
